# EUROPÄISCHE PATENTSCHRIFT

(11) **EP 3 516 677 B1**
(45) Veröffentlichungstag und Bekanntmachung des Hinweises auf die Patenterteilung: **14.12.2022**
(21) Anmeldenummer: 17783404.1
(22) Anmeldetag: 22.09.2017
(51) Int. Cl.: H01H 71/10, H01H 89/06

(54) **MOTORSTARTER**
MOTOR STARTER
DÉMARREUR

(30) Priorität: 23.09.2016 DE 102016118051
(43) Veröffentlichungstag der Anmeldung: 31.07.2019
(73) Patentinhaber: Eaton Intelligent Power Limited, Dublin 4 (IE)
(72) Erfinder: REIDT, Georg, 53913 Swisstal (DE)
(74) Vertreter: Eaton IP Group EMEA
(86) Internationale Anmeldenummer: PCT/EP2017/074007
(87) Internationale Veröffentlichungsnummer: WO 2018/055078

(56) Entgegenhaltungen:
- DE-A1- 1 440 894
- DE-A1- 10 102 316
- DE-T2- 69 832 916
- DE-U1- 29 508 611

## Beschreibung

Die Erfindung betrifft ein Schütz gemäß Anspruch 1 und einen Motorstarter für Elektromotoren gemäß Anspruch 4.

Heutige Motorstarter bestehen häufig aus einer Kombination aus Motorschutzschalter und Schütz, wie beispielsweise Motorstarter der Eaton Corp., die einen Motorschutzschalter vom Typ PKZ oder PKE mit einem Schütz vom Typ DILM kombinieren.

Der Einsatz von elektromechanischen Schützen zum Ein- und Ausschalten von Motoren und elektrischen Lasten wie bei den vorstehend erläuterten Motorstartern ist eine seit Jahrzehnten etablierte Technik. Elektromechanische Schütze können kostengünstig hergestellt werden, deren mechanische Kontaktelemente widerstehen großen Kurzschlussströmen und trennen im ausgeschalteten Zustand die elektrische Last all-polig und galvanisch von der Spannungsquelle ab.

Für das Schalten von elektrischen Lasten werden auch zunehmend Halbleiterschalter, sogenannte Solid State Relays (SSR) oder Solid State Contactor (SSC) eingesetzt. Diese wurden und werden beispielsweise als einpolige Halbleiterschalter zum häufigen Ein- und Ausschalten von ohmschen Lasten wie Heizregister oder IR-Leistungsstrahler verwendet. Durch ständige Weiterentwicklung der Leistungshalbleiter wie Thyristoren und Triacs werden diese immer spannungsfester und haben zunehmend auch geringere Verlustleistungen.

Mittlerweile sind auch reine Halbleiterschalter als Ersatz für herkömmliche Schütze zum Schalten von Motoren in gewissen Leistungsbereichen verfügbar, beispielsweise Halbleiterschütze vom Typ DRC des Unternehmens Crydom Inc., San Diego, USA, oder vom Typ RGCM der Carlo Gavazzi GmbH. Solche Halbleiterschalter weisen einige Vor- und Nachteile gegenüber herkömmlichen Schützen auf: Vorteile sind vor allem das Fehlen von mechanischen Verschleiß der Schaltkontakte und damit eine hohe Anzahl an möglichen Ein- und Ausschaltvorgänge, ein schnelles Ein- und Ausschalten und eine mögliche integrierte Phasenumschaltung, um beispielsweise im selben Formfaktor von insbesondere 45 mm Gehäusebreite einen Motor auch in einer Wendeschütz-Schaltung zu betreiben. Nachteilig ist, dass beim Abschalten keine galvanische Trennung hergestellt wird, im eingeschalteten Zustand eine gewisse Verlustleistung und damit Abwärme entsteht, die durch geeignete Maßnahmen wie beispielsweise den Einsatz von Kühlkörpern abgeführt werden muss, und eine geringere Kurzschlussfestigkeit und Schaltleistung.

Die deutsche Offenlegungsschrift DE 101 02 316 A1 betrifft eine Motorstarteranordnung umfassend ein erstes elektrisches Schaltgerät, insbesondere Leistungsschalter, mit einer elektronischen Auslöseeinheit zur Erzeugung von Überlastauslösesignalen und ein zweites elektrisches Schaltgerät, insbesondere Schütz, wobei die Schaltgeräte in Serie geschaltet sind zur Verbindung beziehungsweise Trennung einer mindestens einphasigen Last mit beziehungsweise von einer Stromquelle. Die Motorstarteranordnung weist zudem Mittel zur bidirektionalen Kommunikation zwischen erstem und zweitem Schaltgerät auf, wobei das erste Schaltgerät und die Mittel zur Kommunikation derart ausgebildet sind, dass ein Auslösevorgang des ersten Schaltgerätes bei Auftreten einer Überlast zeitlich verzögert wird, innerhalb dieser Zeit das zweite Schaltgerät durch die Mittel zur Kommunikation zur Trennung veranlasst wird und im Fall der Nichttrennung durch das zweite Schaltgerät die Auslösung durch das erste Schaltgerät erfolgt.

Aufgabe der vorliegenden Erfindung ist es, einen insbesondere für den Einsatz mit Halbleiterschaltern geeigneten Motorstarter und ein insbesondere für den Einsatz in einem solchen Motorstarter geeignetes Schütz vorzuschlagen.

Diese Aufgabe wird durch die Gegenstände der unabhängigen Ansprüche gelöst. Weitere Ausgestaltungen der Erfindung sind Gegenstand der abhängigen Ansprüche.

Ein der vorliegenden Erfindung zugrundeliegender Gedanke besteht darin, bei einem Motorstarter eine Schutzfunktion zu implementieren, die es ermöglicht, die Motorlast auch dann zu trennen, wenn das Schütz aufgrund eines Defekts keine Trennung mehr bewirken kann. Vor allem bei Halbleiterschützen kann ein solcher Defekt durch eine Durchlegierung auftreten. Bei einer herkömmlichen Motorschutzschalter-Schütz-Kombination erfolgt bei einem solchen Fehlerfall normalerweise keine Trennung, da dieser Fehlerfall nicht detektiert wird und auch keine Detektion vorgesehen ist, sondern nur Fehlerfälle der Motorlast wie beispielsweise ein Kurzschluss im Motor detektiert werden und zu einer Lasttrennung durch den Motorschutzschalter führen.

Eine Ausführungsform der Erfindung betrifft ein Schütz, das insbesondere zum Einsatz in einem Motorstarter nach der Erfindung und wie hierin beschrieben ausgebildet ist und eine Schnittstelle für die mindestens eine Steuerleitung zum Übertragen eines abhängig von einem Schaltsignal zum Schalten des Schützes erzeugten Steuersignals an eine elektronische Auslöseeinrichtung eines Motorschutzschalters aufweist.

Das Schütz weist einen elektrischen Energiespeicher, insbesondere einen Pufferkondensator auf, der vom Schaltsignal geladen wird, und die Schnittstelle weist einen Anschluss für eine Hilfsenergieleitung zwischen Motorschutzschalter und Schütz auf, über die der elektrische Energiespeicher die elektronische Auslöseeinrichtung mit Energie versorgen kann.

Das Schütz kann eine programmierbare Einheit, insbesondere einen Mikrokontroller, und eine mit der programmierbaren Einheit gekoppelte Steuerelektronik zum Steuern eines oder mehrerer Schaltkontakte des Schützes abhängig vom Schaltsignal aufweisen, und die programmierbare Einheit kann derart konfiguriert sein, dass sie abhängig von Daten der Steuerelektronik zum Schalten des oder der Schaltkontakte des Schützes das Steuersignal für die elektronische Auslöseeinrichtung erzeugt und über die mindestens eine Steuerleitung gemäß einem vorgegebenen Datenkommunikationsprotokoll an eine zur Datenkommunikation vorgesehene und mit der elektronischen Auslöseeinrichtung gekoppelte Datenschnittstelle des Motorschutzschalters überträgt. Dies ermöglicht beispielsweise den Einsatz der eingangs erwähnten Motorschutzschalter vom Typ PKE mit Datenschnittstelle in einem Motorstarter mit dem erfindungsgemäßen Schütz.

Das Schütz kann pro Phase mindestens einen Halbleiterschalter als Schaltkontakt und/oder an seiner Vorderseite Befestigungsmittel aufweisen, an denen der Motorschutzschalter mit seiner Unterseite befestigt werden kann.

Eine weitere Ausführungsform der Erfindung betrifft einen Motorstarter aufweisend einen Motorschutzschalter, der eine elektronische Auslöseeinrichtung aufweist, und ein Schütz nach der Erfindung und wie hierin beschrieben, das mit dem Motorschutzschalter zum Bilden des Motorstarters entsprechend verschaltet ist. Erfindungsgemäß ist mindestens eine Steuerleitung zwischen Motorschutzschalter und Schütz vorgesehen, über die ein abhängig von einem Schaltsignal zum Schalten des Schützes erzeugtes Steuersignal vom Schütz an die elektronische Auslöseeinrichtung übertragen wird, und die elektronische Auslöseeinrichtung ist ausgebildet, abhängig vom Steuersignal und Stromfluss über einen oder mehrere Schaltkontakte des Motorschutzschalters ein Auslösesignal zum Abschalten des Stromflusses über den oder die Schaltkontakte des Motorschutzschalters zu erzeugen. Mit einem verhältnismäßig geringen Schaltungsaufwand kann hierdurch der Fehlerfall abgedeckt werden, dass die Schaltkontakte des Schützes trotz einem Schaltsignal zum Abschalten der Motorlast nicht geöffnet werden oder sind.

Der Motorstarter kann einen elektrischen Energiespeicher, insbesondere einen Pufferkondensator zur Energieversorgung der elektronischen Auslöseeinrichtung aufweisen. Hierdurch kann im Motorschutzschalter auch für den Fall ausgelöst werden, dass die zur Auslösung zur Verfügung stehende elektrische Energie, die in der Regel im Motorschutzschalter durch Stromwandler gewonnen wird, nicht ausreicht. Der elektrische Energiespeicher kann als externe Einheit zusätzlich zum Schütz und Motorschutzschalter vorgesehen sein, oder er kann in das Schütz oder den Motorschutzschalter integriert sein. Beispielsweise kann der elektrische Energiespeicher durch den elektrischen Energiespeicher des Schützes gebildet sein, der vom Schaltsignal geladen wird, und es kann eine Hilfsenergieleitung zwischen Motorschutzschalter und Schütz vorgesehen sein, über die der elektrische Energiespeicher die elektronische Auslöseeinrichtung mit Energie versorgen kann. Durch die über die Hilfsenergieleitung vom Pufferkondensator zur Verfügung gestellte zusätzliche Energie kann dann ausreichend Energie zum Auslösen zur Verfügung gestellt werden. Alternativ kann auch der Motorschutzschalter den elektrischen Energiespeicher aufweisen, der vom zum Schalten des Schützes erzeugten Steuersignal geladen wird.

Um einen Motorstarter mit möglichst kompakten Ausmaßen zu schaffen, kann beispielsweise ein Motorschutzschalter vom Typ PKE mit einem Halbleiterschütz kombiniert werden. Der Platzbedarf eines Wendestarters kann durch den Einsatz des Halbleiterschützes von einer Baubreite von 90 mm auf eine Baubreite von 45 mm reduziert werden. Bei einem Direktstarter entfällt jedoch dieser Vorteil der Baubreitenverringerung. Eine solche Gerätekombination benötigt daher genauso viel Platz wie eine herkömmliche Kombination beispielsweise eines Motorschutzschalters vom Typ PKE mit einem Schütz vom Typ DILM. Dieses Problem kann dadurch gelöst werden, dass ein Motorstarter aus der Kombination eines Motorschutzschalters vom Typ PKE mit einem Halbleiterschütz so aufgebaut wird, dass der Motorschutzschalter auf dem Halbleiterschütz montiert wird, ähnlich wie es aus der deutschen Gebrauchsmusterschrift DE 295 08 611 U1 bekannt ist. Dadurch kann Montageplatz und somit Fläche auf der Montageplatte eines Schaltschranks eingespart werden. Demnach kann das Schütz an seiner Vorderseite Befestigungsmittel aufweisen, an denen der Motorschutzschalter mit seiner Unterseite befestigt werden kann. Um die durch die Verlustleistung im Halbleiterschütz erzeugte Abwärme effizient abführen zu können, kann zudem ein Kühlmodul vorgesehen sein, dass an seiner Rückseite Befestigungsmittel für eine Schaltschrankmontage und an seiner Vorderseite Befestigungsmittel, an denen das Schütz mit seiner Unterseite befestigt werden kann, aufweist.

Der Motorschutzschalter kann mindestens ein Stromflussmessmittel, insbesondere einen Stromwandler, und eine von dem oder den Stromflussmessmittel(n) eingangsseitig gespeiste Mess- und Energieversorgungsschaltung zur Stromversorgung der elektronischen Auslöseeinrichtung und eines Aktuators zum Betätigen des Schaltkontakts oder der Schaltkontakte des Motorschutzschalters aufweisen. Dies ermöglich sowohl eine Messung des Stromflusses über die Schaltkontakte des Motorschutzschalters als auch die Erzeugung von Energie, die für einen Auslöse-/Abschalt-/Lasttrenn-Vorgang durch den Motorschutzschalter benötigt wird.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

Die Zeichnungen zeigen in
Fig. 1 ein Blockschaltbild eines Ausführungsbeispiels eines Motorstarters gemäß der Erfindung und die Verschaltung des Motorschutzschalters und des Schützes dieses Motorstarters;
Fig. 2 ein Blockschaltbild eines Ausführungsbeispiels eines für den Einsatz in einem erfindungsgemäßen Motorstarter ausgebildeten Schützes;
Fig. 3 ein Blockschaltbild eines zweiten Ausführungsbeispiels eines Motorstarters gemäß der Erfindung und die Verschaltung des Motorschutzschalters und des Schützes dieses Motorstarters, die eine Hilfsenergieleitung umfasst;
Fig. 4 ein Blockschaltbild eines Motorstarters und die Verschaltung des Motorschutzschalters und des Schützes dieses Motorstarters; Dieses Beispiel ist nicht Teil der Erfindung;
Fig. 5 ein Blockschaltbild eines Motorstarters und die Verschaltung des Motorschutzschalters und des Schützes dieses Motorstarters, wobei ein herkömmlicher Motorschutzschalter vom Typ PKE eingesetzt wird; Dieses Beispiel ist nicht Teil der Erfindung; und
Fig. 6 ein Blockschaltbild eines dritten Ausführungsbeispiels eines Motorstarters gemäß der Erfindung und die Verschaltung des Motorschutzschalters und des Schützes dieses Motorstarters, wobei das Schütz eine Feldbus-Datenschnittstelle zur Steuerung der Schützfunktion aufweist.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

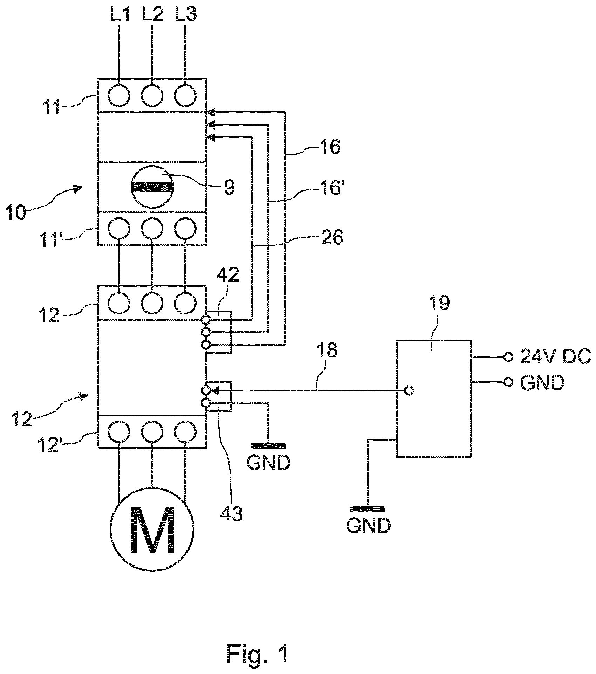

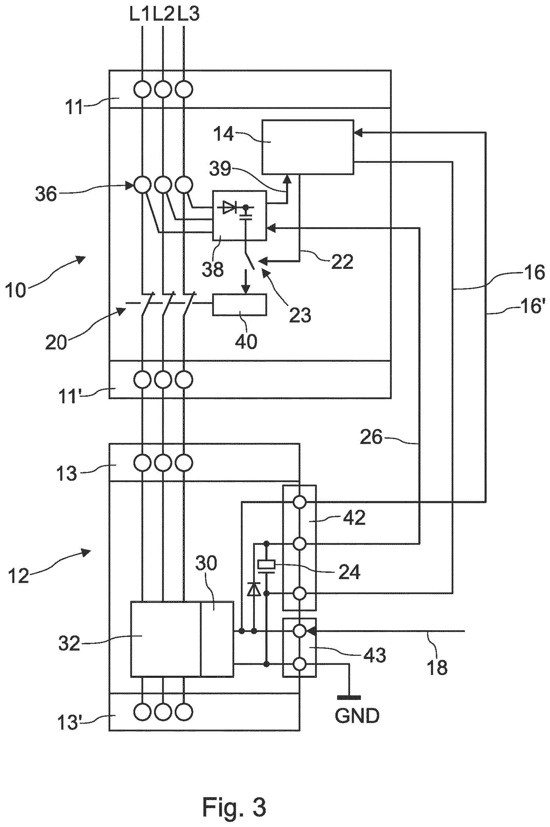

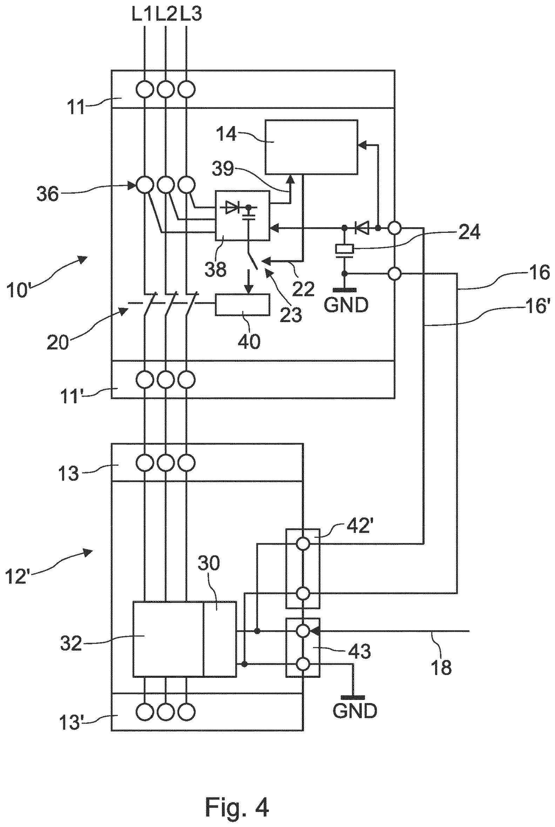

Fig. 1 zeigt einen dreiphasigen Motorstarter für einen dreiphasigen Motor M. Der Motorstarter weist einen Motorschutzschalter 10, beispielsweise der eingangs erwähnte Schutzschalter vom Typ PKE, und ein Schütz 12 auf. Über Anschlussklemmen 11 ist der Motorschutzschalter 10 auf die übliche Weise mit den drei Phasen L1, L2, L3 einer Netzversorgung verbunden. Die Netzanschlüsse des Motors M sind mit entsprechenden Anschlussklemmen 12' des Schützes 12 verbunden. Die anderen Anschlussklemmen 12 des Schützes sind mit den Anschlussklemmen 11' des Motorschutzschalters 10 verdrahtet. Über einen Drehschalter 9 werden die drei internen Schaltkontaktpaare (pro Phase ein Schaltkontaktpaar) geöffnet oder geschlossen. Zusätzlich besitzt der Motorschutzschalter 10 intern noch Schutzvorrichtungen zum Abschalten des Motors beispielsweise bei Überlast oder Kurzschluss, die nachfolgend im Detail noch unter Bezugnahme auf die Fig. 3 und 4 beschrieben werden.

Der Motor M wird bei geschlossenen Schaltkontakten des Motorschutzschalters 10 über das Schütz 12 gestartet. Hierzu weist das Schütz 12 eine Schnittstelle 43 zum Zuführen eines Schaltsignals 18 auf, das beispielsweise von einer SPS (SpeicherProgrammierbare Steuerung) 19 erzeugt werden kann. Die SPS 19 wird von einer 24 V DC Gleichspannung (bezogen auf das Potential GND) versorgt und besitzt einen 24 V DC Schaltausgang, an dem das Steuersignal 18 anliegt (0 V/24 V DC). Sollen die Schaltkontakte des Schützes 12 geöffnet werden, das Schütz 12 also abgeschaltet sein, gibt die SPS 19 als Schaltsignal 0 V aus. Zum Schließen der Schaltkontakte des Schützes 12 gibt die SPS 19 ein 24 V DC Schaltsignal 18 aus. Selbstverständlich sind andere Spannungswerte zum Öffnen und Schließen der Schaltkontakte des Schützes 12 denkbar, beispielsweise genau umgekehrt 0 V zum Schließen und 24 V DC zum Öffnen.

Das Schütz 12 kann als ein elektromechanisches Schütz, ein Halbleiterschütz oder als ein Hybrid-Schütz (elektromechanisches Schütz kombiniert mit Halbleiterschaltern) implementiert sein.

Ohne zusätzliche Schutzmaßnahmen wird die Motorlast nur vom Motorschutzschalter 10 abgeschaltet, nämlich für den Fall einer durch den Motorschutzschalter 10 detektierten Überlast oder eines detektierten Kurzschlusses. Tritt im Schütz 12 ein elektrischer Defekt auf, beispielsweise eine Durchlegierung bei einem Halbleiterschütz oder ein Kurzschluss im Schütz 12, durch den die Schaltkontakte des Schützes dauerhaft geschlossen bleiben, kann die Motorlast nicht mehr über das Schaltsignal 18 von der SPS 19 abgeschaltet werden. Bei einem derartigen Defekt des Schützes 12 läuft dann der Motor M dauerhaft. Der Motorschutzschalter 10 schaltet dann wie oben erläutert nur bei einer Überlastsituation oder einem Kurzschluss im Motor M ab.

Um eine Abschaltung der Motorlast auch im Fall eines Defekts des Schützes 12 zu ermöglichen, könnten beispielsweise ein zusätzliches Schaltorgan und eine Strommesseinrichtung vorgesehen werden, so dass bei einem von der Strommesseinrichtung detektierten Stromfluss über das Schütz 12 trotz Schaltsignal 18 zum Abschalten des Schützes 12 das zusätzliche Schaltorgan, das von der Strommesseinrichtung entsprechend angesteuert wird, den Stromfluss durch die Motorwicklungen abschaltet.

Um den Aufwand für eine derartige Abschaltung zu minimieren, wird erfindungsgemäß die im Motorschutzschalter 10 ohnehin vorhandene Stromflussmesseinrichtung verwendet und der Schutzschalter derart konfiguriert, dass durch entsprechende Verschaltung mit dem Schütz 12 auch bei einem elektrischen Defekt des Schützes 12 eine Abschaltung erfolgen kann, nämlich speziell gesteuert über ein entsprechendes Steuersignal, das vom Schütz 12 auch im Fall eines Defekts erzeugt werden kann und über zusätzliche Leitungen 16, 16' zwischen einer Schnittstelle 42 des Schützes 12 und entsprechenden Eingängen des Motorschutzschalters 10 vom Schütz 12 an den Motorschutzschalter 10 übertragen wird. Eine weitere Leitung 26 kann zwischen der Schnittstelle 42 des Schützes 12 und dem Motorschutzschalter 10 zum Übertragen von Hilfsenergie vorgesehen sein, welche dem Motorschutzschalter 10 zum Abschalten bzw. Kontaktöffnen zusätzlich zur Verfügung steht.

Nachfolgend wird nun anhand von weiteren Ausführungsbeispielen das Schaltungskonzept für den erfindungsgemäßen Motorstarter im Detail erläutert.

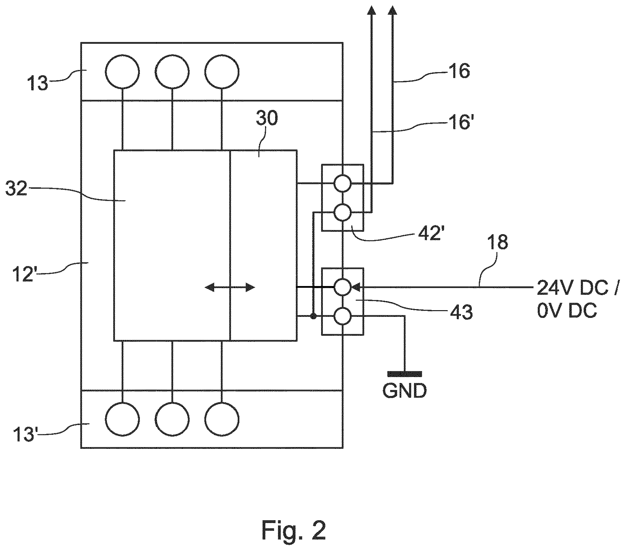

Fig. 2 zeigt ein Halbleiterschütz 12', das speziell für den Einsatz im erfindungsgemäßen Motorstarter ausgebildet ist und hierzu eine Steuerelektronik 30 zum Steuern der als Halbleiterschalter implementierten Schaltkontakte 32 des Schützes 12' aufweist. Die Schaltkontakte 32 können beispielsweise durch Thyristoren, Triacs oder Leistungstransistoren (z.B. Bipolare Leistungstransistoren, Leistungs-MOSFETs, Insulated Gate Bipolar Transistors IGBTs) implementiert sein, deren Steuereingänge von der Steuerelektronik 30 angesteuert werden und deren Leistungsstrecken zwischen die Anschlussklemmen 13 und 13' geschaltet sind. Das Halbleiterschütz 12' weist ferner die bereits erwähnte Schnittstelle 42 zum Anschließen der Steuerleitungen 16, 16' auf, über die das Steuersignal an den Motorschutzschalter 10 übertragen wird, das abhängig vom Schaltsignal 18 erzeugt wird. Im dargestellten Halbleiterschütz 12' wird das Steuersignal direkt durch das Schaltsignal 18 erzeugt, d.h. das Steuersignal entspricht hier dem Schaltsignal 18, wie durch die Verschaltung der Schnittstellte 42 mit der Schnittstelle 43 für das Schaltsignal 18 gezeigt ist. Das Steuersignal zeigt damit dem Motorschutzschalter 10 an, wenn ein Einschaltbefehl des Halbleiterschützes 12' anliegt.

Es können drei wesentliche Betriebszustände des Motorstarters unterschieden werden, die auftreten können und wesentlich für die Verarbeitung des Steuersignals durch den Motorschutzschalter 10 sind:
Normaler Betriebszustand, kein Fehler im Schütz 12':

| | | | |
|---|---|---|---|
| Motorlast abschalten: | Schaltkontakte 32 des Schützes sind geöffnet -> kein Stromfluss zwischen den Kontakten der Anschlussklemmen 13 und 13' möglich | Leitung 16, 16' liefert als Steuersignal 0 V an den Motorschutzschalter 10 | Betriebszustand fehlerfrei |
| Schaltsignal = 0 V | | | |
| Motorlast einschalten: | Schaltkontakte 32 des Schützes sind geschlossen -> Stromfluss zwischen den | Leitung 16, 16' liefert als Steuersignal 24 V DC an den Motorschutzschalter | Betriebszustand fehlerfrei |
| Schaltsignal = 24 V (oder 12 V oder 5V) | | | |
| DC | Kontakten der Anschlussklemmen 13 und 13' möglich | 10 | |

Tritt nun der Fehlerfall ein, bei dem einer oder mehrere der Halbleiterschalter 32 defekt und dauerhaft geschlossen sind, insbesondere durchlegiert sind, und demnach das Halbleiterschütz 12' einen oder mehrere Kurzschlüsse zwischen Kontakten der Anschlussklemmen 13 und 13' aufweist, kann die Motorlast durch das Schütz 12' nicht mehr abgeschaltet werden, ergibt sich folgende Signalkombination:

| | | | |
|---|---|---|---|
| Motorlast abschalten: | Schaltkontakte 32 des Schützes sind wegen Defekt des Halbleiterschützes geschlossen -> Stromfluss zwischen den Kontakten der Anschlussklemmen 13 und 13' trotz Befehl "Motor abschalten" möglich | Leitung 16, 16' liefert als Steuersignal 0 V an den Motorschutzschalter 10, der aber einen Stromfluss zwischen den Kontakten seiner Anschlussklemmen 11, 11' detektiert, obwohl das Steuersignal 0 V vorliegt | Betriebszustand fehlerhaft, Motorschutzschalter muss auslösen, um die Motorlast vom Netz zu trennen |
| Schaltsignal = 0 V | | | |

Im obigen Fehlerfall kann nun der Motorschutzschalter 10 den Stromkreis trennen und die Motorlast abschalten. Die Auslösung erfolgt dadurch, dass die elektronische Auslöseeinrichtung des Motorschutzschalters 10 ausgebildet ist, abhängig von dem über die Leitungen 16, 16' übermittelten Steuersignal und dem Stromfluss über die Schaltkontakte des Motorschutzschalters 10 ein Auslösesignal zu erzeugen, mit dem Stromfluss über die Schaltkontakte des Motorschutzschalters 10 abgeschaltet werden kann, also eine Auslösung des Motorschutzschalters wie in einem Fehlerfall im Motor erfolgt, nur eben durch einen Fehlerfall im Schütz 12 initiiert.

Die hierfür im Motorschutzschalter 10 erforderliche Schaltungstechnik ist in Fig. 3 im Detail gezeigt: das über die Leitungen 16, 16' übertragene und auf das Bezugspotential GND bezogene Steuersignal wird von einer elektronischen Auslöseeinrichtung 14 des Motorschutzschalters 10 empfangen. Der Stromfluss über die Schaltkontakte 20 des Motorschutzschalters 10 wird über Stromwandler 36 (pro Phase ein Stromwandler in Fig. 3, möglich sind auch andere Stromflussmessmittel oder weniger Stromwandler, beispielsweise einer für alle Phasen) gemessen. Die Messwerte oder -signale der Stromwandler 36 werden einer Mess- und Energieversorgungsschaltung 38 zugeführt, welche zur Energieversorgung eines Aktuators 40 zum Öffnen und Schließen der mechanischen Schaltkontakte 20 vorgesehen ist. Ein Ausgangssignal 39 der Mess- und Energieversorgungsschaltung 38, das einen Stromfluss über einen oder mehrere der Schaltkontakte 20 signalisiert, wird der elektronischen Auslöseeinrichtung 14 zugeführt, welche ein Auslösesignal 22 erzeugt, wenn das Steuersignal 0 V vorliegt (also "Motorlast abschalten" über das Schaltsignal 18 signalisiert wurde) und dennoch das Ausgangssignal 39 einen Stromfluss signalisiert. Das Auslösesignal 22 betätigt einen Schalter 23, um den Aktuator 40 auszulösen. Dadurch werden die Schaltkontakte 20 geöffnet und der Stromfluss über den Motorschutzschalter 10 unterbrochen, die Motorlast also abgeschaltet. Die Betätigung des Schalters 23 besteht insbesondere aus einem zeitlichen Schließen und anschließendem Öffnen, um den Aktuator 40 auslösen zu können. Er ist über ein Schaltschloss (hier nicht dargestellt) an die Schaltkontakte 20 funktional gekoppelt. Wird der Schalter 23 zum Öffnen der Schaltkontakte 20 geschlossen, so wird der Aktuator 40 bestromt und kann die Schaltkontakte 20 dann öffnet; Nach der Auslösung wird der Schalter 23 wieder geöffnet so dass der Aktuator nicht mehr bestromt wird. Sind in der Grundstellung des Aktuators 40 dagegen die Schaltkontakte 20 geöffnet, so können diese durch das Betätigen des Drehschalters 9 wieder geschlossen werden, wobei gleichzeitig der Aktuator 40 wieder für eine mögliche weitere Auslösung vorgespannt wird.

Da die Auslöseenergie des Motorschutzschalters 10 in der Regel über die Stromwandler 36 erzeugt wird, kann es bei kleineren Lastströmen dazu kommen, dass die Energie zum Auslösen nicht ausreicht. In diesem Fall weiß zwar die Auslöseeinrichtung 14, dass sie auslösen soll, es jedoch aufgrund der zu geringen zur Verfügung stehenden Energie nicht realisieren kann. Um diesen Fall abzudecken, kann erfindungsgemäß zusätzlich im Schütz 12 ein Pufferkondensator 24 als elektrischer Energiespeicher vorgesehen sein, der für das Auslösen zusätzliche Energie über eine weitere Hilfsenergieleitung 26 von der Schnittstelle 42 des Schützes 12 zum Motorschutzschalter 10 zur Verfügung stellt. Der Pufferkondensator 24 ist hierfür zwischen die beiden Anschlüsse der Schnittstelle 43 geschaltet und wird daher über das Schaltsignal 18 aufgeladen, solange dieses 24 V DC beträgt, also "Motorlast einschalten" signalisiert wird. Praktisch liegt dann der Pufferkondensator zwischen dem Bezugspotential GND und 24 V DC. Eine zwischen dem Schaltsignal 24 V DC und einen Anschluss des Pufferkondensators 24 geschaltete Diode gewährleistet, dass sich der Pufferkondensator 24 nicht entladen kann, wenn das Schaltsignal 0 V beträgt. Als Bezugspotential wird immer das Potential GND verwendet, welches auch über die Leitung 16' dem Motorschutzschalter 10 zur Verfügung steht.

Fig. 4 zeigt eine Implementierung, die nicht Teil der Erfindung ist, bei welcher der Pufferkondensator 24 im Motorschutzschalter 10' angeordnet ist. Wie dargestellt sind bei dieser Implementierung nur zwei Leitungen 16, 16' zwischen der Schnittstelle 42 des Schützes 12' und dem Motorschutzschalter 10' erforderlich, die Hilfsenergieleitung 26 kann also entfallen. Der gegenüber der Implementierung von Fig. 3 reduzierte Verdrahtungsaufwand zwischen Schütz 12' und Motorschutzschalter 10' bedingt jedoch einen modifizierten Motorschutzschalter 10' mit eingebauten Pufferkondensator 24 wie in Fig. 4 dargestellt.

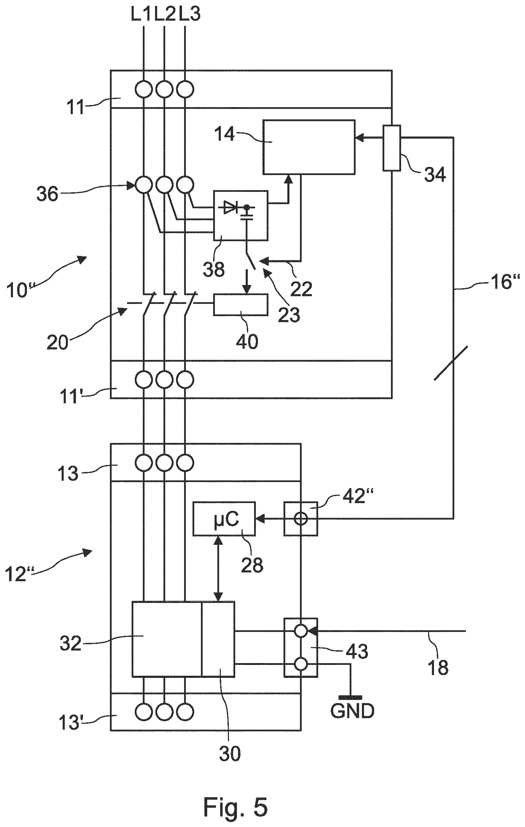

Fig. 5 zeigt eine Implementierung, die nicht Teil der Erfindung ist, mit dem eingangs erwähnten Motorschutzschalter 10" vom Typ PKE, der eine kommunikationsfähige Datenschnittstelle 34 aufweist. Um den erfindungsgemäßen Motorstarter auch mit einem solchen Motorschutzschalter 10" realisieren zu können, wird ein Halbleiterschütz 12" eingesetzt, das einen Mikrokontroller µC 28 als programmierbare Einheit aufweist.

Der Mikrokontroller 28 ist derart konfiguriert, dass er abhängig von Daten der Steuerelektronik 30 des Schützes zum Schalten des oder der Schaltkontakte 32 des Schützes 12" das Steuersignal für die elektronische Auslöseeinrichtung 14 erzeugt und über eine beispielswiese als Flachband-Datenkabel implementierte Steuerleitung 16" überträgt, die zwischen eine entsprechende Schnittstelle 42" des Schützes 12' und die Datenschnittstelle 34 des Motorschutzschalters 10" geschaltet ist. Die Daten werden gemäß einem Datenkommunikationsprotokoll übertragen, das durch die Datenschnittstelle 34 des Motorschutzschalters 10" vorgegeben ist. Ein möglicher Pufferkondensator kann hier ebenfalls, wie in Fig. 3 und Fig. 4 dargestellt wurde, als Energiespeicher vorhanden sein.

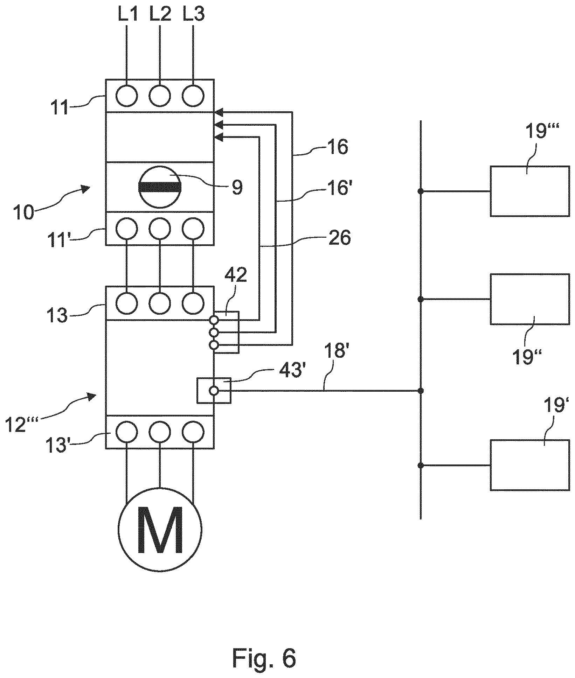

Fig. 6 zeigt eine Implementierung mit beispielsweise dem eingangs erwähnten Motorschutzschalter 10 vom Typ PKE und einem Schütz 12‴ mit einer Feldbus-Datenschnittstelle 43'. Die Feldbus-Datenschnittstelle 43' kann beispielsweise für den Anschluss an und zur Datenkommunikation über ein Bussystem ausgebildet sein, das auf der SmartWire-DT^{®}-Technologie der Eaton Corp. und/oder dem Profibus-DP/AS-Interface/Modbus (beispielsweise im RTU-Modus)/IO-Link-Standard basiert. Die Schnittstelle 43' kann auch zur Datenkommunikation mittels mehrerer verschiedener Busprotokolle gemäß den vorgenannten Standards ausgebildet sein, damit das Schütz 12'" universell an verschiedenen Bussystemen betrieben werden kann. Die in Fig. 6 gezeigte Implementierung unterscheidet sich von der in Fig. 1 gezeigten im Wesentlichen in der Steuerung der Schützfunktion "Ein/Aus" über die Datenschnittstelle 43' und über die Möglichkeit eine Hilfsspannung bereitzustellen. Während in Fig. 1 die Schützfunktion Ein/Aus über eine SPS 19 gesteuert wird, erfolgt bei der in Fig. 6 gezeigten Implementierung der Schützfunktion "Ein/Aus" über den Feldbus 18', an dem ein Feldbus-Master 19' angeschlossen ist, der mehrere Feldbus-Slaves 19", 19‴ ansteuern kann. Das Schütz 12‴ agiert in dieser Implementierung ebenfalls als ein Feldbus-Slave, das vom Feldbus-Master 19' wie die anderen Feldbus-Slaves 19" und 19'" gesteuert werden kann.

## Patentansprüche

1. Schütz (12) aufweisend
- eine Schnittstelle (42) für mindestens eine Steuerleitung (16, 16') zum Übertragen eines abhängig von einem Schaltsignal (18) zum Schalten des Schützes (12) erzeugten Steuersignals an eine elektronische Auslöseeinrichtung (14) eines Motorschutzschalters (10),
**gekennzeichnet durch**
- einen elektrischen Energiespeicher (24), der vom Schaltsignal (18) geladen wird,
- wobei die Schnittstelle (42) einen Anschluss für eine Hilfsenergieleitung (26) zwischen Motorschutzschalter (10) und Schütz (12) aufweist, über die der elektrische Energiespeicher (24) die elektronische Auslöseeinrichtung (14) mit Energie versorgen kann.

2. Schütz nach Anspruch 1,
**dadurch gekennzeichnet, dass**
- es eine programmierbare Einheit (28) und eine mit der programmierbaren Einheit (28) gekoppelte Steuerelektronik (30) zum Steuern eines oder mehrerer Schaltkontakte (32) des Schützes (12') abhängig vom Schaltsignal (18) aufweist, und
- die programmierbare Einheit (28) derart konfiguriert ist, dass sie abhängig von Daten der Steuerelektronik (30) zum Schalten des oder der Schaltkontakte (32) des Schützes (12') das Steuersignal für die elektronische Auslöseeinrichtung (14) erzeugt und über die mindestens eine Steuerleitung (16") gemäß einem vorgegebenen Datenkommunikationsprotokoll an eine zur Datenkommunikation vorgesehene und mit der elektronischen Auslöseeinrichtung (14) gekoppelte Datenschnittstelle (34) des Motorschutzschalters (10') überträgt.

3. Schütz nach Anspruch 1 oder 2,
**dadurch gekennzeichnet, dass**
- es pro Phase mindestens einen Halbleiterschalter (32) als Schaltkontakt aufweist und/oder
- es an seiner Vorderseite Befestigungsmittel aufweist, an denen der Motorschutzschalter (10, 10') mit seiner Unterseite befestigt werden kann.

4. Motorstarter aufweisend
- einen Motorschutzschalter (10), der eine elektronische Auslöseeinrichtung (14) aufweist, und
- ein Schütz (12) nach einem der vorhergehenden Ansprüche, das mit dem Motorschutzschalter (10) zum Bilden des Motorstarters entsprechend verschaltet ist,
**dadurch gekennzeichnet, dass**
- mindestens eine Steuerleitung (16, 16') zwischen Motorschutzschalter (10) und Schütz (12) vorgesehen ist, über die ein abhängig von einem Schaltsignal (18) zum Schalten des Schützes (12) erzeugtes Steuersignal vom Schütz (12) an die elektronische Auslöseeinrichtung (14) übertragen wird, und
- die elektronische Auslöseeinrichtung (14) ausgebildet ist, abhängig vom Steuersignal und Stromfluss über einen oder mehrere Schaltkontakte (20) des Motorschutzschalters (10) ein Auslösesignal (22) zum Abschalten des Stromflusses über den oder die Schaltkontakte (20) des Motorschutzschalters (10) zu erzeugen.

5. Motorstarter nach Anspruch 4,
**dadurch gekennzeichnet, dass**
- der elektrische Energiespeicher durch den elektrischen Energiespeicher (24) des Schützes (12) gebildet ist, der vom Schaltsignal (18) geladen wird, und eine Hilfsenergieleitung (26) zwischen Motorschutzschalter (10) und Schütz (12) vorgesehen ist, über die der elektrische Energiespeicher (24) die elektronische Auslöseeinrichtung (14) mit Energie versorgen kann.

6. Motorstarter nach Anspruch 4 oder 5,
**dadurch gekennzeichnet, dass**
- ein Kühlmodul vorgesehen ist, dass an seiner Rückseite Befestigungsmittel für eine Schaltschrankmontage und an seiner Vorderseite Befestigungsmittel, an denen das Schütz (12, 12') mit seiner Unterseite befestigt werden kann, aufweist.

7. Motorstarter nach einem der Ansprüche 4 bis 6,
**dadurch gekennzeichnet, dass**
der Motorschutzschalter (10, 10') mindestens ein Stromflussmessmittel (36), und eine von dem oder den Stromflussmessmittel(n) (36) eingangsseitig gespeiste Mess- und Energieversorgungsschaltung (38) zur Stromversorgung der elektronischen Auslöseeinrichtung (14) und eines Aktuators (40) zum Betätigen des Schaltkontakts oder der Schaltkontakte (20) des Motorschutzschalters (10, 10') aufweist.

## Claims

1. Contactor (12), comprising
- an interface (42) for at least one control line (16, 16') for transmitting to an electronic tripping device (14) of a motor circuit breaker (10) a control signal, generated depending on a switching signal (18) for switching the contactor (12),
**characterized by**
- an electrical energy storage (24) which is charged by the switching signal (18),
- wherein the interface (42) has a connection for an auxiliary power conductor (26) between the motor circuit breaker (10) and the contactor (12), via which the electrical energy storage (24) can supply energy to the electronic tripping device (14).

2. Contactor according to Claim 1,
**characterized in that**
- it comprises a programmable unit (28) and control electronics (30) coupled to the programmable unit (28) for controlling one or more switching contacts (32) of the contactor (12') depending on the switching signal (18), and
- the programmable unit (28) is configured such that, depending on data of the control electronics (30) for switching the switching contact or switching contacts (32) of the contactor (12'), it generates the control signal for the electronic tripping device (14) and transmits it, via the at least one control line (16") according to a prespecified data communication protocol, to a data interface (34) of the motor circuit-breaker (10') provided for data communication and coupled to the electronic tripping device (14).

3. Contactor according to Claims 1 or 2,
**characterized in that**
- it comprises at least one semiconductor switch (32) per phase as a switching contact, and/or
- it comprises fastening means on its front side, to which the motor circuit-breaker (10, 10') can be fastened with its underside.

4. Motor starter, comprising
- a motor circuit-breaker (10) comprising an electronic tripping device (14), and
- a contactor (12) according to any one of the preceding claims, which contactor is connected accordingly to the motor circuit-breaker (10) to form the motor starter,
**characterized in that**
- at least one control line (16, 16') is provided between the motor circuit-breaker (10) and the contactor (12), via which a control signal, generated depending on a switching signal (18) for switching the contactor (12), is transmitted from the contactor (12) to the electronic tripping device (14), and
- the electronic tripping device (14) is designed to generate a tripping signal (22) for switching off the current flow via one or more switching contacts (20) of the motor circuit-breaker (10), depending on the control signal and current flow via the one or more switching contacts (20) of the motor circuit-breaker (10).

5. Motor starter according to Claim 4,
**characterized in that**
- the electrical energy storage is formed by the electrical energy storage (24) of the contactor (12), which is charged by the switching signal (18), and an auxiliary power line (26) is provided between motor circuit-breaker (10) and contactor (12), via which the electrical energy storage (24) can supply the electronic tripping device (14) with energy.

6. Motor starter according to Claims 4 or 5,
**characterized in that**
- a cooling module is provided that has fastening means for a switching cabinet mounting on its back side and, on its front side, fastening means at which the contactor (12, 12') can be fastened with its underside.

7. Motor starter according to any one of Claims 4 to 6,
**characterized in that**
the motor circuit-breaker (10, 10') comprises at least one current flow measurement means (36); and a measurement and energy supply circuit (38), fed at the input side by the current flow measurement means (36), in order to supply power to the electronic tripping device (14) and to an actuator (40) for actuating the switching contact or the switching contacts (20) of the motor circuit-breaker (10, 10').

## Revendications

1. Contacteur-interrupteur (12) présentant
- une interface (42) pour au moins une ligne de commande (16, 16') pour la transmission d'un signal de commande généré en fonction d'un signal de commutation (18) pour la commutation du contacteur-interrupteur (12) à un dispositif de déclenchement électronique (14) d'un disjoncteur de protection de moteur (10),
**caractérisé par**
- un accumulateur d'énergie électrique (24) qui est chargé par le signal de commutation (18),
- dans lequel l'interface (42) présente une connexion pour une ligne d'énergie auxiliaire (26) entre le disjoncteur de protection de moteur (10) et le contacteur-interrupteur (12), par l'intermédiaire de laquelle ligne d'énergie auxiliaire l'accumulateur d'énergie électrique (24) peut alimenter le dispositif de déclenchement électronique (14) en énergie.

2. Contacteur-interrupteur selon la revendication 1,
**caractérisé en ce que**
- il présente une unité programmable (28) et une électronique de commande (30) connectée à l'unité programmable (28) pour la commande d'un ou de plusieurs contacts de commutation (32) du contacteur-interrupteur (12') en fonction du signal de commutation (18), et
- l'unité programmable (28) est configurée de telle manière qu'elle génère le signal de commande pour le dispositif de déclenchement électronique (14) en fonction de données de l'électronique de commande (30) pour la commutation du ou des contacts de commutation (32) du contacteur-interrupteur (12') et le transmet à une interface de données (34) du disjoncteur de protection de moteur (10') prévue pour la communication de données et connectée au dispositif de déclenchement électronique (14) par l'intermédiaire de l'au moins une ligne de commande (16") selon un protocole de communication de données prédéterminé.

3. Contacteur-interrupteur selon la revendication 1 ou 2,
**caractérisé en ce que**
- il présente au moins un commutateur à semi-conducteurs (32) en tant que contact de commutation par phase et/ou
- il présente sur sa face avant des moyens de fixation auxquels le disjoncteur de protection de moteur (10, 10') peut être fixé avec sa face inférieure.

4. Démarreur de moteur présentant
- un disjoncteur de protection de moteur (10) qui présente un dispositif de déclenchement électronique (14), et
- un contacteur-interrupteur (12) selon l'une des revendications précédentes, lequel est connecté en conséquence au disjoncteur de protection de moteur (10) pour la formation du démarreur de moteur,
**caractérisé en ce que**
- au moins une ligne de commande (16, 16') est prévue entre le disjoncteur de protection de moteur (10) et le contacteur-interrupteur (12), par l'intermédiaire de laquelle un signal de commande généré en fonction d'un signal de commutation (18) pour la commutation du contacteur-interrupteur (12) est transmis du contacteur-interrupteur (12) au dispositif de déclenchement électronique (14), et
- le dispositif de déclenchement électronique (14) est configuré pour générer, en fonction du signal de commande et du flux de courant par l'intermédiaire d'un ou de plusieurs contacts de commutation (20) du disjoncteur de protection de moteur (10), un signal de déclenchement (22) permettant la coupure du flux de courant par l'intermédiaire du ou des contacts de commutation (20) du disjoncteur de protection de moteur (10).

5. Démarreur de moteur selon la revendication 4,
**caractérisé en ce que**
- l'accumulateur d'énergie électrique est formé par l'accumulateur d'énergie électrique (24) du contacteur-interrupteur (12) qui est chargé par le signal de commutation (18), et une ligne d'énergie auxiliaire (26) est prévue entre le disjoncteur de protection de moteur (10) et le contacteur-interrupteur (12), par l'intermédiaire de laquelle l'accumulateur d'énergie électrique (24) peut alimenter le dispositif de déclenchement électronique (14) en énergie.

6. Démarreur de moteur selon la revendication 4 ou 5,
**caractérisé en ce que**
- un module de refroidissement est prévu, lequel présente, sur sa face arrière, des moyens de fixation pour un montage d'armoire de distribution et, sur sa face avant, des moyens de fixation auxquels le contacteur-interrupteur (12, 12') peut être fixé avec sa face inférieure.

7. Démarreur de moteur selon l'une des revendications 4 à 6,
**caractérisé en ce que**
le disjoncteur de protection de moteur (10, 10') présente au moins un moyen de mesure de flux de courant (36) et un circuit de mesure et d'alimentation en énergie (38) alimenté côté entrée par le ou les moyens de mesure de flux de courant (36) et permettant d'alimenter en énergie le dispositif de déclenchement électronique (14) et un actionneur (40) permettant de faire fonctionner le contact de commutation ou les contacts de commutation (20) du disjoncteur de protection de moteur (10, 10').
